# EUROPÄISCHE PATENTSCHRIFT

(11) **EP 3 254 754 B1**
(45) Veröffentlichungstag und Bekanntmachung des Hinweises auf die Patenterteilung: **07.08.2019**
(21) Anmeldenummer: 17173612.7
(22) Anmeldetag: 31.05.2017
(51) Int. Cl.: B01J 19/30

(54) **FÜLLKÖRPER**
FILLING ELEMENT
CORPS DE REMPLISSAGE

(30) Priorität: 08.06.2016 EP 16173501
(43) Veröffentlichungstag der Anmeldung: 13.12.2017
(73) Patentinhaber: Vereinigte Füllkörper-Fabriken GmbH & Co. KG, 56235 Ransbach-Baumbach (DE)
(72) Erfinder: Schwämmlein, Kurt, 55545 Bad Kreuznach (DE)
(74) Vertreter: Quermann, Helmut

(56) Entgegenhaltungen:
- EP-A2- 0 930 096
- WO-A1-84/02088
- WO-A2-2011/149802
- DE-A1-102013 018 190
- GB-A- 1 498 360

## Beschreibung

Die Erfindung betrifft einen Füllkörper, insbesondere für Stoff- und/oder Wärmeaustauschkolonnen, die von einer Gas- und/oder Flüssigkeitsströmung durchsetzt werden, aufweisend eine Außenstruktur, wobei durch die Außenstruktur zwei einander abgewandte Hauptausdehnungsflächen des Füllkörpers gebildet sind, und aufweisend eine zwischen den beiden Hauptausdehnungsflächen ausgebildete Innenstruktur.

Es ist bekannt, Füllkörper verschiedener Ausführungsformen angeordnet in einem sog. Füllkörperbett - meist als regellose Schüttungen - in Kolonnen, Reaktoren und ähnlichen Apparaten einzusetzen. Technische Anwendungen sind beispielsweise gegeben bei thermischen, chemischen oder physikalischen Verfahren wie Absorption, Desorption (Strippung), Destillation, Rektifikation, Extraktion, direkter Gaskühlung, regenerativer Verbrennung, katalytischer Stoffumwandlung und anderen verfahrenstechnischen Trennprozessen, bei denen verschiedene Phasen bzw. Medien effektiv in Kontakt gebracht werden sollen.

Die Füllkörper vergrößern die Oberfläche in dem von ihnen ausgefüllten Volumen und intensivieren dadurch den Stoff- bzw. Wärmeaustausch zwischen den verschiedenen Phasen bzw. Medien innerhalb dieses Volumens. Die Phasengrenzfläche für den Stoffübergang stimmt in der Regel nicht exakt mit der geometrischen Füllkörperoberfläche überein, sondern ist vielmehr die Summe aus der während des Prozesses benetzten Füllkörperoberfläche und der Oberflächensumme aller sich im Füllkörperbett bildenden Tropfen und/oder sich bildenden Rinnsalen.

Ferner dienen Füllkörper bzw. Füllkörperschüttungen der Abscheidung kleiner und kleinster Flüssigkeitströpfchen bis hin zur Abscheidung von sogenannten Aerosolen. Auch finden Füllkörper als Aufwuchsfläche für einen Biofilm in biologischen Anlagen und als Tropfkörper in Wäschern Anwendung.

Das durch die Füllkörper gebildete Füllkörperbett weist gegenüber der Strömung der Phasen einen bestimmten Druckverlust auf. Dieser hängt vom Gasbelastungsfaktor, der Berieselungsdichte, dem Füllkörpertyp, der Füllkörpergröße, der geometrischen Gestaltung des Füllkörpers und weiteren Parametern ab.

Die Füllkörper müssen für alle Anwendungen eine geeignete mechanische Stabilität und eine geeignete Oberfläche aufweisen, sowie eine gute Durchmischung der verschiedenen Phasen oder Medien erzeugen, ohne der Strömung der Phasen oder Medien jedoch einen zu großen Druckverlust entgegenzusetzen. Das für den jeweiligen Trennprozess oder chemischen bzw. thermischen Prozess notwendige Schüttvolumen soll so gering wie möglich sein.

In der Regel muss ein geeigneter Kompromiss zwischen den entgegengesetzt verlaufenden Anforderungen, wie zum Beispiel geringer Druckverlust bei möglichst großer Füllkörperoberfläche, gefunden werden.

Aus der EP 1 586 375 A1 ist ein Füllkörper bekannt, der zwei einander abgewandte Hauptausdehnungsflächen, eine Außenstruktur sowie eine Innenstruktur aufweist, wobei die Außenstruktur die Innenstruktur umschließt. Die Innenstruktur ist gitterförmig ausgebildet und weist mindestens zwei Durchgangskanäle auf. Ferner ist ein Querschnitt der Außenstruktur mit mindestens sechs Kanten gebildet.

In der WO 84/02088 ist ein Füllkörper offenbart, der die Merkmale des Oberbegriffs des Patentanspruchs 1 aufweist. Dieser Füllkörper weist eine Außenstruktur und eine Innenstruktur auf. Durch die Außenstruktur sind zwei einander abgewandte Hauptausdehnungsflächen des Füllkörpers gebildet und die Innenstruktur ist zwischen den beiden Hauptausdehnungsflächen ausgebildet. Die Innenstruktur weist zumindest ein inneres Leitprofil auf, wobei das innere Leitprofil geneigt zu den Hauptausdehnungsflächen ausgebildet ist. Die Außenstruktur ist durch Außenstäbe gebildet, wobei die Außenstruktur die Innenstruktur umschließt.

Weiterer Stand der Technik ist durch die GB 1 498 360 A gebildet.

Aufgabe der vorliegenden Erfindung ist es, einen Füllkörper, der die Merkmale des Oberbegriffs des Patentanspruchs 1 aufweist, derart weiterzubilden, dass dieser sich durch ein Optimum hinsichtlich niedrigem Druckverlust und geeignet großer Fläche auszeichnet. Ferner soll eine besonders gute Durchmischung von Medien, die den Füllkörper bzw. ein durch diese Füllkörper gebildetes Füllkörperbett durchströmen, erreicht werden, so dass ein besonders großer Stoffaustausch bzw. Wärmeaustausch resultiert.

Gelöst wird die Aufgabe durch einen Füllkörper, der gemäß den Merkmalen des Patentanspruchs 1 ausgebildet ist.

Der Füllkörper weist eine Außenstruktur und eine Innenstruktur auf, wobei durch die Außenstruktur zwei einander abgewandte Hauptausdehnungsflächen des Füllkörpers gebildet sind und die zwischen den beiden Hauptausdehnungsflächen ausgebildete Struktur des Füllkörpers die Innenstruktur bildet. Dabei weist die Innenstruktur zumindest ein inneres Leitprofil auf, wobei das innere Leitprofil geneigt zu den Hauptausdehnungsflächen ausgebildet ist. In diesem Zusammenhang ist der Begriff "geneigt" dahingehend zu verstehen, dass das innere Leitprofil weder senkrecht noch parallel zu den Hauptausdehnungsflächen ausgebildet ist.

Die Außenstruktur ist durch Außenstäbe gebildet, wobei mehrere dieser Außenstäbe sich zwischen den beiden Hauptausdehnungsflächen erstrecken.

Das zwischen den beiden Hauptausdehnungsflächen ausgebildete innere Leitprofil bewirkt, dass ein in den Füllkörper einströmendes Fluid, insbesondere ein von der einen Hauptausdehnungsfläche in Richtung der anderen Hauptausdehnungsfläche strömendes Fluid innerhalb des Füllkörpers durch das innere Leitprofil umgelenkt wird. Dadurch werden die Strömungsgeschwindigkeit und die Strömungsrichtung des den Füllkörper durchströmenden Fluids verändert, wodurch eine besonders gute Durchmischung, insbesondere eine Verwirbelung erreicht wird, was sich wiederum vorteilhaft auf den Stoff- und/oder Wärmeaustausch auswirkt.

Dadurch, dass die Außenstruktur durch Außenstäbe gebildet ist, weist der Füllkörper eine gitterförmige Außenstruktur und somit eine sehr offene Außenkontur in beliebiger Raumrichtung auf, die einer Gas- und/oder Flüssigkeitsströmung einen geringen Widerstand entgegensetzt, wodurch der Druckverlust minimiert und ein Eindringen der einströmenden Fluide in das Füllkörperinnere und ein Ausströmen des Fluids aus dem Füllkörperinneren begünstigt wird.

Insbesondere durch die sich zwischen den Hauptausdehnungsflächen erstreckenden Außenstäbe weist der Füllkörper eine hohe mechanische Stabilität bei einer dennoch sehr offenen Außenkontur auf.

Die Außenstäbe sind vorzugsweise dünnwandig ausgebildet, um einen möglichst großen Flächenanteil der Außenkontur offen zu gestalten und somit einen geringen Strömungswiderstand und ein geringes Gewicht des Füllkörpers zu erzielen.

Bevorzugt weisen die Außenstäbe einen sich nach außen oder innen verjüngenden, insbesondere spitz verlaufenden Querschnitt auf. Vorzugsweise weisen die Außenstäbe abwechselnd einen sich nach außen verjüngenden und einen sich nach innen verjüngenden Querschnitt auf.

Als besonders vorteilhaft wird es angesehen, wenn die Außenstäbe verdrillt gestaltet sind. Durch die Verdrillung der Stäbe wird die Vermischung der einströmenden Fluide verbessert.

Insbesondere für eine verdrillte Dreiecksform der Stäbe und/oder wenn die Verjüngung der Stäbe abwechselnd nach außen und nach innen gerichtet ist, wird das von außen einströmende Fluid sowie das vom Innenraum nach außen strömende Fluid jeweils leicht abgelenkt, wodurch jeweils eine verbesserte Quervermischung erreicht und die Summe der Druckverlustanteile für den ein- und ausströmenden Anteil der Fluidströmung nicht nachteilig beeinflusst wird.

Es ist durchaus denkbar und bevorzugt, wenn die Außenstäbe Abtropfnasen oder Gebilde, die als Abtropfnasen dienen können, aufweisen. Diese vergrößern die Oberfläche und führen daher zu einem verbesserten Stoff- und/oder Wärmeaustausch.

Gemäß einer vorteilhaften Ausführungsform der Erfindung ist des Weiteren vorgesehen, dass die Außenstäbe eine einem Dreieck, einem Trapez, einem L, einem Kranz oder einem Rechteck identische oder ähnliche Querschnittsform aufweisen. Die Außenstäbe sollten zudem eine sich verjüngende Querschnittsform aufweisen, wobei die Verjüngung über die gesamte oder zumindest eine Teillänge dieser Außenstäbe nach außen gerichtet ist. Diese Verjüngung nach außen ist von besonderem Vorteil unter dem Aspekt eines minimalen Druckverlusts.

Die Außenstäbe und/oder Innenstäbe können eine Längs- und/oder Querprofilierung aufweisen.

Vorzugsweise sind die Außenstäbe in ihrer Grundform ideal teilkreisförmig, unregelmäßig oder regelmäßig in verschiedenen Richtungen gewellt, beispielsweise nussförmig gewellt oder teilgewellt mit geradlinigen Anteilen, verdrillt, glatt, längs- oder querprofiliert, zum überwiegenden Teil in einer Querschnittsform ausgeführt, die einem Dreieck oder einem Trapez oder einer ähnlichen Form entspricht, wobei aber die spitzen oder schmalen Seiten bzw. schmäleren Teilflächen überwiegend nach außen gerichtet sind. Sie verjüngen sich also überwiegend nach außen und bringen somit jedweder Strömung von vorneherein einen geringen bzw. minimalen Strömungswiderstand entgegen. Um die äußere Struktur möglichst offen zu gestalten, d.h. damit von vorneherein sowohl von einer strömenden Gasphase als auch von einer strömenden Flüssigphase ein möglichst großer Anteil auch in das Füllkörperinnere gelangt und der jeweiligen Fluidströmung ein minimaler Strömungswiderstand entgegengesetzt wird, werden zweckmäßig alle Stäbe möglichst schlank ausgeführt. Beispielsweise beträgt ein Verhältnis der Stablänge zur Wurzel aus einer Querschnittsfläche des Stabes in besonders bevorzugter Weise 5:1.

In bevorzugter Weise ist die Querschnittsform der Außenstäbe abschnittsweise abwechselnd ein sich nach außen verjüngendes Dreieck bzw. Trapez bzw. ähnliche Form und ein sich nach innen verjüngendes Dreieck bzw. Trapez bzw. ähnliche Form.

Der äußere Bereich der Außenstäbe kann auch jeweils mit Abtropfnasen besetzt sein. Derartige Gebilde bzw. Abtropfnasen sind bevorzugt strömungsgünstig ausgeformt, so dass der Strömung kein nennenswert höherer Strömungswiderstand entgegengebracht wird im Vergleich zu einer Ausführung ohne solche Gebilde. Derartige Gebilde verbessern jedoch den Stoff- und Wärmeaustausch durch die anteilig vergrößerte Oberfläche und die dadurch vermehrte Tropfenbildung, die ihrerseits einen zusätzlichen anteiligen Beitrag zu einer weiteren vergrößerten Oberfläche für den Stoff- und Wärmeaustausch bildet, gepaart mit dem weiteren sehr positiven Effekt einer sehr geringen Diffusionswegstrecke infolge der geringen Tropfengröße.

Bei einer bevorzugt flachen Ausgestaltungsform des Füllkörpers wird sich dieser in einer Schüttung z.B. in einer Kolonne auch überwiegend flach ausrichten, d.h. die Flächennormale einer der beiden Teilflächen von einer der beiden der Hauptausdehnungsflächen bzw. die einer durch die Außenstruktur gebildete Ebene wird zumeist annähernd parallel zur Kolonnenachse sein. Dies wirkt sich gleichfalls vorteilhaft auf den Stoff- und/oder Wärmeaustausch aus.

Insbesondere bei der vorgenannten Ausrichtung des Füllkörpers bzw. Anordnung der Füllkörper stabilisieren die sich zwischen den beiden Hauptausdehnungsflächen erstreckenden Außenstäbe den Füllkörper gegen aufgrund der Gewichtskraft der übrigen Füllkörper im Wesentlichen senkrecht zu den Haupausdehnungsflächen auf den jeweiligen Füllkörper einwirkende Kräfte. Dadurch können auch hohe Füllkörperkolonnen gebildet werden, wobei eine Verformung oder gar Zerstörung insbesondere der an einem Behälterboden angeordneten Füllkörper vermieden ist.

Die Außenstruktur weist einen ersten umlaufenden Außenstab und einen zweiten umlaufenden Außenstab aufweist, wobei der erste umlaufende Außenstab die eine Hauptausdehnungsfläche und der zweite umlaufende Außenstab die andere Hauptausdehnungsfläche umlaufend umschließt. Die sich zwischen den beiden Hauptausdehnungsflächen erstreckenden Außenstäbe verbinden den ersten umlaufenden Außenstab mit dem zweiten umlaufenden Außenstab.

Der umlaufende Außenstab bzw. die umlaufenden Außenstäbe erhöhen zum einen die mechanische Stabilität des Füllkörpers und zum anderen erhöhen insbesondere profiliert und/oder verdrillte umlaufende Außenstäbe die äußere Oberfläche des Füllkörpers, wodurch der Stoff- und/oder Wärmeaustausch verbessert wird.

Vorzugsweise weist der Füllkörper mehrere Seitenflächen auf, wobei die Seitenflächen zwischen den beiden Hauptausdehnungsflächen ausgebildet sind, wobei die Außenstäbe jeweils im Übergangsbereich zwischen zwei Seitenflächen und/oder im Übergangsbereich zwischen einer der beiden Hauptausdehnungsflächen und einer der Seitenflächen ausgebildet sind. Die Seitenflächen und/oder die Hauptausdehnungsflächen werden somit von den Außenstäben umschlossen und bilden infolge dessen im wesentlichen offene Flächen, durch die ein einströmendes Medium mit geringem Strömungswiderstand in den Füllkörper eindringen bzw. aus dem Füllkörper austreten kann, bei gleichzeitig hoher mechanischer Stabilität der Außenstruktur.

Die Außenstruktur weist in einem Randbereich der einen Hauptausdehnungsfläche und/oder in einem Randbereich der anderen Hauptausdehnungsfläche mehrere nach außen hervorstehende Teilbereiche auf. Der erste umlaufende Außenstab und der zweite umlaufende Außenstab weisen einen alternierenden Verlauf auf.

Ein Außenstab verbindet einen der im Randbereich der einen Hauptausdehnungsfläche hervorstehenden Teilbereiche mit einem der im Randbereich der anderen Hauptausdehnungsfläche hervorstehenden Teilbereiche.

Um zum einen den Stoff- und/oder Wärmeaustausch zu intensivieren und zum anderen die Bildung von Abtropfstellen zu begünstigen ist in einer bevorzugten Ausführungsform vorgesehen, dass die Außenstruktur im Bereich der einen Hauptausdehnungsfläche und im Bereich der anderen Hauptausdehnungsfläche jeweils mehrere nach außen gerichtete Kanten aufweist, insbesondere in einer Aufsichtsprojektion zwei in Projektionsrichtung gegenüberliegende Kanten zueinander versetzt ausgebildet sind.

In Abhängigkeit von der Ausrichtung des inneren Leitprofils bezüglich der Hauptausdehnungsflächen und der Form des Leitprofils kann eine mehr oder weniger starke Umlenkung des Fluids erreicht werden.

Vorzugsweise ist das innere Leitprofil plattenförmig mit einer bevorzugt geringen Wanddicke gestaltet, wobei es durchaus denkbar ist, dass das innere Leitprofil gekrümmt ausgebildet ist.

Hinsichtlich der Ausrichtung und der Neigung des inneren Leitprofils wird es als besonders vorteilhaft angesehen, wenn auf der die eine Hauptausdehnungsfläche aufweisenden Seite des Füllkörpers durch die Außenstruktur eine Ebene gebildet ist, wobei das innere Leitprofil geneigt zu dieser Ebene ausgebildet ist. Ein kleiner Winkel zwischen dem inneren Leitprofil und der Ebene korrespondiert dabei zu einer besonders starken Umlenkung eines in Richtung der einen Hauptausdehnungsfläche einströmenden Fluids. Vorzugsweise beträgt der Winkel zwischen dem inneren Leitprofil und der Ebene ≥ 10° bis ≤ 80°, insbesondere ≥ 20° bis ≤ 70°.

Ein kleiner Winkel, beispielsweise im Bereich von 20°, stellt eine sehr flache Ausführungsform des Füllkörpers und somit einen Füllkörper mit einer niedrigen Bauhöhe dar mit allerdings höherem Druckverlust. Ein Füllkörper mit einem Leitprofil im Winkelbereich von 70° weist eine entsprechend größere Bauhöhe auf und zeichnet sich durch einen niedrigeren Druckverlust für die Fluidströmung aus.

In einer vorteilhaften Weiterbildung weist der Füllkörper mehrere beabstandete innere Leitprofile auf, wobei insbesondere vorgesehen ist, dass die inneren Leitprofile in die gleiche Richtung geneigt ausgebildet sind. Die Gestaltung des Füllkörpers mit mehreren inneren Leitprofilen gewährleistet, dass eine besonders effektive Umlenkung des Fluidstroms innerhalb des Füllkörpers über eine möglichst große Fläche bei gleichzeitig geringer Bauhöhe des Füllkörpers erreicht wird.

In einer vorteilhaften Ausführungsform ist vorgesehen, dass der Füllkörper mehrere innere Leitprofile aufweist, wobei die inneren Leitprofile um eine Achse umlaufend angeordnet sind, wobei die inneren Leitprofile bezüglich einer Umlaufrichtung um die Achse in die gleiche Richtung geneigt ausgebildet sind. Bei einer derartigen Ausführungsform der Erfindung sind die Leitprofile folglich ähnlich den Flügeln eines Propellers angeordnet. Diese Anordnung der Leitprofile bewirkt eine besonders gute Durchmischung der Medien bei Durchströmung des Füllkörpers, was sich wiederum vorteilhaft auf den Stoff- und/oder Wärmeaustausch auswirkt. Die Umlenkung des den Füllkörper durchströmenden Fluids an den linksgängig oder rechtsgängig angeordneten Leitprofilen begünstigt zudem die Bildung einer Drallströmung des Fluids, wodurch ein besonders effektiver Stoff- und/oder Wärmeaustausch zwischen den Medien erreicht wird. Bei einer derartigen Ausführungsform ist insbesondere vorgesehen, dass die inneren Leitprofile einen gemeinsamen Schnittpunkt und/oder eine sich in Richtung der Achse erstreckende gemeinsame Schnittlinie aufweisen. Dies wirkt sich vorteilhaft auf die mechanische Stabilität aus.

Als besonders vorteilhaft wird es angesehen, wenn innere Leitprofile sich im Wesentlichen radial nach innen erstrecken, insbesondere die Leitprofile kreuzförmig oder sternförmig angeordnet sind.

Als besonders vorteilhaft wird es angesehen, wenn benachbarte innere Leitprofile zueinander geneigt und somit nicht parallel zueinander ausgebildet sind. Dadurch wird ein in den Leitkörper eindringender Fluidstrom an den unterschiedlichen Leitprofilen um unterschiedliche Winkel umgelenkt, wodurch die Geschwindigkeit und Richtung des Fluidstroms lokal variiert werden, wodurch der Stoff- und/oder Massenaustausch effizienter erfolgt. Ein Winkel zwischen zwei inneren Leitprofilen beträgt dabei vorzugsweise ≥5° und ≤ 20°.

Es wird als vorteilhaft angesehen, wenn zwei benachbarte innere Leitprofile einen den Füllkörper von der einen Hauptausdehnungsfläche in Richtung der anderen Hauptausdehnungsfläche durchsetzenden Durchgangskanal bilden.

Als besonders vorteilhaft wird es angesehen, wenn innere Leitprofile in einer Richtung senkrecht zu der durch die Außenstruktur gebildeten Ebene - d.h. in einer Aufsichtsprojektion - sich annähernd berühren oder sogar überlappend angeordnet sind. Dadurch wird eine große Fläche des Füllkörpers parallel zu der Ebene durch die inneren Leitprofile abgedeckt. Ein in einer Richtung senkrecht zu der Ebene in den Füllkörper einströmendes Fluid kann somit nicht ungehindert den Füllkörper durchdringen. Stattdessen wird ein Großteil des Fluids an den sich nahezu oder ganz überlappenden inneren Leitprofilen umgelenkt.

Des Weiteren trifft eine in Richtung der Ebene auf den Füllkörper einströmende oder herabregnende Flüssigkeit nur auf der Einströmrichtung zugewandte Flächen der inneren Leitprofile auf, wobei überlappende Teilbereiche der inneren Leitprofile und der Einströmrichtung abgewandten Flächen der inneren Leitprofile trocken bleiben. Ein an die abgewandte Fläche des Leitprofils einströmender Gasstrom kann dadurch ungestört an den Leitprofilen und im Zwischenbereich zwischen den Leitprofilen umgelenkt werden. Hieraus resultiert ein geringer Druckverlust. Um den Stoffaustausch zu erhöhen, können Löcher, Schlitze oder andere Öffnungsformen in die Leitprofile eingebracht werden, wodurch Flüssigkeit auch auf die Rückseite des jeweiligen Leitprofils gelangt und eine intensive Durchmischung der verschiedenen Fluide erfolgt, so dass der Stoffaustausch bzw. Wärmeaustausch erhöht wird.

Um eine Verformung oder ein Brechen des Füllkörpers zu verhindern sowie die Stabilität des Füllkörpers, insbesondere die Stabilität des inneren Leitprofils gegen eine mechanische Verformung zu erhöhen, ist in einer vorteilhaften Weiterbildung vorgesehen, dass die Innenstruktur zumindest einen Verbindungssteg aufweist, wobei der Verbindungssteg das innere Leitprofil mit der Außenstruktur oder zwei innere Leitprofile verbindet. Der Verbindungssteg ist dabei vorzugsweise dünnwandig ausgebildet, um einen geringen Strömungswiderstand und ein geringes Gewicht des Füllkörpers sicherzustellen. Dieser Verbindungssteg kann ganz oder teilweise in der Innenstruktur liegen. Es ist auch denkbar, dass der Verbindungssteg ganz außen auf einer der beiden Hauptausdehnungsflächen - z.B. verbindend über die äußeren Leitprofile und über der Außenstruktur - aufgesetzt ist.

Um eine intensive Durchmischung und Umlenkung des an dem Füllkörper anströmenden und vorbeiströmenden Fluids zu erhöhen, ist es durchaus denkbar, dass der Füllkörper zumindest ein äußeres Leitprofil aufweist, wobei das äußere Leitprofil von einer der Hauptausdehnungsflächen und/oder von einer durch die Außenstruktur gebildeten, zwischen den Hauptausdehnungsflächen angeordneten Seitenfläche des Füllkörpers nach außen hervorstehend ausgebildet ist.

Hinsichtlich einer einfachen Gestaltung und einfachen Herstellung des Füllkörpers ist in einer vorteilhaften Weiterbildung vorgesehen, dass das innere Leitprofil und das äußere Leitprofil Teilbereiche eines Leitkörpers sind, wobei dieser Leitkörper zumindest eine der Hauptausdehnungsflächen und/oder zumindest eine der Seitenflächen des Füllkörpers durchsetzt.

Hinsichtlich einer möglichst großen Flächenabdeckung ist es durchaus denkbar, dass ein inneres Leitprofil und ein äußeres Leitprofil, ein Leitkörper und ein inneres Leitprofil und/oder mehrere Leitkörper in einer Richtung senkrecht zu der durch die Außenstruktur gebildeten Ebene überlappend angeordnet sind.

In einer bevorzugten Ausführungsform weist das innere und/oder das äußere Leitprofil zumindest eine Durchtrittsöffnung auf. Durch die Durchtrittsöffnung wird der Strömungswiderstand des Füllkörpers verringert und zudem das Strömungsprofil des einströmenden Fluids lokal variiert.

Die Durchtrittsöffnung kann beispielsweise kreisförmig oder schlitzartig ausgebildet sein. Es ist auch durchaus denkbar, dass in das Leitprofil mehrere Schnitte eingebracht sind, wobei eine Durchtrittsöffnung dadurch gebildet ist, dass ein zwischen den Schnitten liegender Teilbereich des Leitprofils bügelförmig herausgebogen ist, insbesondere zwei benachbarte Teilbereiche gegensinnig bügelförmig ausgebogen sind.

Insbesondere hinsichtlich der Bildung einer großen Anzahl von Abtropfstellen an dem inneren und/oder dem äußeren Leitprofil wird es als besonders vorteilhaft angesehen, wenn das innere und/oder das äußere Leitprofil mehrere, vorzugsweise in Richtung der einen Hauptausdehnungsfläche und/oder in Richtung der anderen Hauptausdehnungsfläche ausgebildete Vorsprünge aufweist. Vorzugsweise sind diese Vorsprünge stabförmig ausgebildet, wobei es durchaus denkbar ist, dass ein Vorsprung die ihm zugewandte Hauptausdehnungsfläche durchsetzt.

Um eine möglichst geringe Bauhöhe des Füllkörpers zu erreichen, ist eine durch die Außenstruktur gebildete Außenkontur des Füllkörpers vorzugsweise flach ausgebildet und/oder gewellt und/oder gewinkelt und/oder sattelförmig und/oder verdrillt gestaltet. Insbesondere weist die Außenkontur zwei einander abgewandte Seitenflächen auf, wobei diese Seitenflächen gewinkelt zueinander ausgebildet sein können.

In einer bevorzugten Ausführungsform des Füllkörpers ist ein Querschnitt der Außenstruktur gebildet, der mehrere nach außen gerichtete Kanten aufweist. Diese Kanten sind insbesondere spitz ausgebildet.

Vorzugsweise ist die Außenstruktur des Füllkörpers in einander abgewandten Endbereichen stärker oder schwächer ausgebildet als in einem mittleren Bereich der Außenstruktur, der sich zwischen den einander abgewandten Endbereichen befindet. Insbesondere ist der Füllkörper zwischen dem jeweiligen Endbereich und dem mittleren Bereich stärker oder schwächer ausgebildet als im Endbereich und im mittleren Bereich. Durch diese Gestaltung lässt sich insbesondere die Stabilität des Füllkörpers erhöhen sowie der Stoffaustausch bzw. Wärmeaustausch optimieren.

In einer bevorzugten Ausführungsform sind Oberflächen des Füllkörpers, insbesondere die Oberfläche des inneren Leitprofils, zumindest teilweise profiliert gestaltet.

Der Füllkörper besteht insbesondere aus Kunststoff oder Metall oder Keramik. Diese Werkstoffe ermöglichen es, die Strukturen des Füllkörpers, insbesondere das innere Leitprofil, das äußere Leitprofil, den Leitkörper, den Verbindungssteg sowie die Außenstruktur möglichst so zu gestalten, sodass eine sehr offene Struktur des Füllkörpers und ein möglichst geringes Gewicht des Füllkörpers bei dennoch hoher mechanischer Stabilität gewährleistet ist. Hierbei werden auch moderne Fertigungsmethoden - wie z.B. 3D-Druck - für die verschiedenen Werkstoffe berücksichtigt.

Bei dem beschriebenen Füllkörper ist es durchaus möglich, dass sich innenliegende Komponenten, vorliegend die Leitprofile, bis in den Bereich der Außenstruktur erstrecken.

Weitere Merkmale der Erfindung sind in der nachfolgenden Beschreibung der Figuren sowie den Figuren selbst dargestellt, wobei bemerkt wird, dass alle Einzelmerkmale und alle Kombinationen von Einzelmerkmalen erfindungswesentlich sind.

In den Figuren ist die Erfindung anhand von acht bevorzugten Ausführungsformen dargestellt, ohne hierauf beschränkt zu sein.

Die Figuren zeigen:
- Fig. 1: ein erstes Ausführungsbeispiel des Füllkörpers in einer Ansicht gemäß dem Pfeil I in Fig. 2,
- Fig. 2: den Füllkörper in einer Ansicht gemäß dem Pfeil II in Fig. 1,
- Fig. 3: den Füllkörper in einer Ansicht gemäß dem Pfeil III in Fig. 1,
- Fig. 4: den Füllkörper in einer Schnittansicht gemäß der Linie IV in Fig. 2,
- Fig. 5: den Füllkörper in einer Schnittansicht gemäß der Linie V in Fig. 2,
- Fig. 6: den Füllkörper gemäß Fig. 1 in einer perspektivischen Ansicht,
- Fig. 7: ein zweites Ausführungsbeispiel des Füllkörpers in einer Ansicht gemäß dem Pfeil VII in Fig. 8,
- Fig. 8: den Füllkörper in einer Ansicht gemäß dem Pfeil VIII in Fig. 7,
- Fig. 9: den Füllkörper gemäß Fig. 7 in einer perspektivischen Ansicht,
- Fig. 10: ein drittes Ausführungsbeispiel des Füllkörpers in einer Ansicht gemäß dem Pfeil X in Fig. 11,
- Fig. 11: den Füllkörper in einer Ansicht gemäß dem Pfeil XI in Fig. 10,
- Fig. 12: den Füllkörper gemäß Fig. 10 in einer perspektivischen Ansicht,
- Fig. 13: ein viertes Ausführungsbeispiel des Füllkörpers in einer Ansicht gemäß dem Pfeil XIII in Fig. 14,
- Fig. 14: den Füllkörper in einer Ansicht gemäß dem Pfeil XIV in Fig. 13,
- Fig. 15: den Füllkörper gemäß Fig. 13 in einer perspektivischen Ansicht,
- Fig. 16: ein fünftes Ausführungsbeispiel des Füllkörpers in einer Ansicht gemäß dem Pfeil XVI in Fig. 17,
- Fig. 17: den Füllkörper in einer Ansicht gemäß dem Pfeil XVII in Fig. 16,
- Fig. 18: den Füllkörper gemäß Fig. 16 in einer perspektivischen Ansicht;
- Fig. 19: ein Vergleichsbeispiel eines Füllkörpers, welches nicht von den Patentansprüchen umfasst ist, in einer Ansicht gemäß dem Pfeil XIX in Fig. 20,
- Fig. 20: den Füllkörper in einer Ansicht gemäß dem Pfeil XX in Fig. 19,
- Fig. 21: den Füllkörper in einer Schnittansicht gemäß der Linie XXI - XXI in Fig. 20,
- Fig. 22: den Füllkörper gemäß Fig. 19 in einer perspektivischen Ansicht,
- Fig. 23: ein Vergleichsbeispiel eines Füllkörpers, welches nicht von den Patentansprüchen umfasst ist, in einer Ansicht gemäß dem Pfeil XXIII in Fig. 24,
- Fig. 24: den Füllkörper in einer Ansicht gemäß dem Pfeil XXIV in Fig. 23,
- Fig. 25: den Füllkörper in einer Schnittansicht gemäß der Linie XXV - XXV in Fig.24,
- Fig. 26: den Füllkörper gemäß Fig. 23 in einer perspektivischen Ansicht,
- Fig. 27: ein weiteres Ausführungsbeispiel des Füllkörpers in einer Ansicht gemäß dem Pfeil XXVII in Fig. 28,
- Fig. 28: den Füllkörper in einer Ansicht gemäß dem Pfeil XXVIII in Fig. 27,
- Fig. 29: den Füllkörper in einer Schnittansicht gemäß der Linie XXIX - XXIX in Fig.28,
- Fig. 30: den Füllkörper gemäß Fig. 27 in einer perspektivischen Ansicht.

Die jeweilige in den Figuren veranschaulichte Ausführungsform des Füllkörpers 1 findet mit einer Vielzahl entsprechender Füllkörper 1 Verwendung in einer Anordnung in einem sog. Bett aus Füllkörpern 1, meist einer regellosen Schüttung.

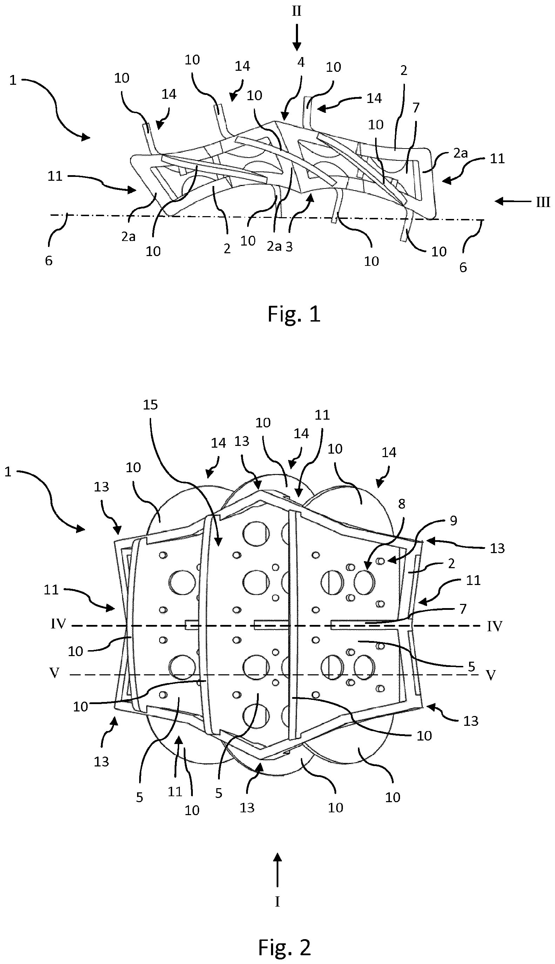

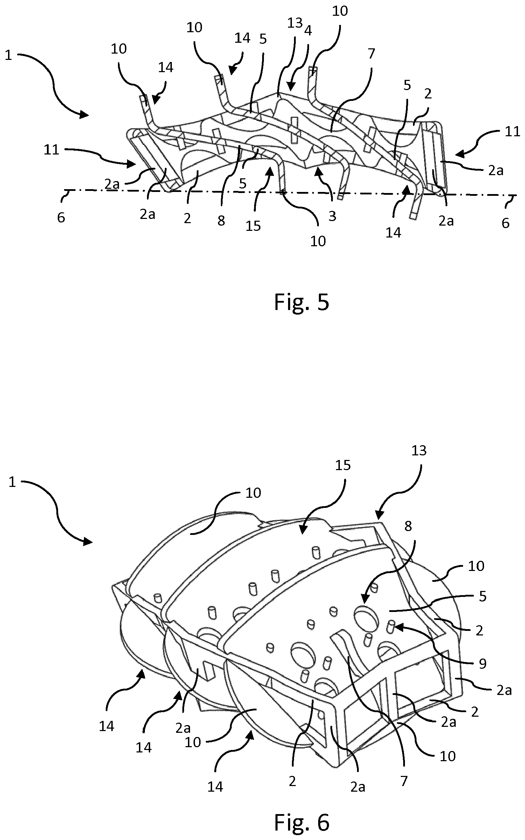

Die in den Fig. 1 bis 6 veranschaulichte Gestaltung eines ersten Ausführungsbeispiels des Füllkörpers 1 weist eine Außenstruktur 2, 2a mit zwei einander abgewandten im Wesentlichen offenen Hauptausdehnungsflächen 3, 4 auf, wobei ein Querschnitt der Außenstruktur 2, 2a gebildet ist, der sechs nach außen gerichtete Kanten 13 aufweist. Zudem weist der Füllkörper 1 mehrere im Wesentlichen offene Seitenflächen 11 auf, wobei diese Seitenflächen 11 zwischen den beiden Hauptausdehnungsflächen 3, 4 ausgebildet sind.

Die Außenstruktur 2, 2a ist durch Außenstäbe 2, 2a gebildet, wobei sechs dieser Außenstäbe 2, 2a sich zwischen den beiden Hauptausdehnungsflächen 3, 4 erstrecken und mit dem Bezugszeichen 2a gekennzeichnet sind. Zwei der Außenstäbe 2, 2a sind als umlaufende Außenstäbe 2 ausgebildet, wobei der erste umlaufende Außenstab 2 die eine Hauptausdehnungsfläche 3 und der zweite umlaufende Außenstab 2 die andere Hauptausdehnungsfläche 4 umlaufend umschließt. Die sich zwischen den Hauptausdehnungsflächen 3, 4 erstreckenden Außenstäbe 2a sind jeweils im Übergangsbereich zwischen zwei Seitenflächen 11 und die umlaufenden Außenstäbe 2 im Übergangsbereich zwischen einer der beiden Hauptausdehnungsflächen 3, 4 und den Seitenflächen 11 ausgebildet. Die Seitenflächen 11 und die Hauptausdehnungsflächen 3, 4 werden somit von den Außenstäben 2, 2a bzw. Teilbereichen der Außenstäbe 2, 2a umschlossen und bilden infolge dessen im wesentlichen offene Flächen, durch die ein einströmendes Medium mit geringem Strömungswiderstand in den Füllkörper 1 eindringen bzw. aus dem Füllkörper 1 austreten kann. Die sich zwischen den beiden Hauptausdehnungsflächen 3, 4 erstreckenden Außenstäbe 2a verbinden den ersten umlaufenden Außenstab 2 mit dem zweiten umlaufenden Außenstab 2, wodurch die Außenstruktur 2, 2a des Füllkörpers 1 eine hohe mechanischer Stabilität bei geringem Eigengewicht aufweist.

Dadurch, dass die Außenstruktur 2, 2a durch Außenstäbe 2, 2a gebildet ist weist der Füllkörper 1 eine gitterförmige Außenstruktur 2, 2a und somit eine sehr offene Außenkontur in beliebiger Raumrichtung auf, die einer Gas- und/oder Flüssigkeitsströmung einen geringen Widerstand entgegensetzt, wodurch der Druckverlust minimiert und ein Eindringen der einströmenden Fluide in das Füllkörperinnere und ein Ausströmen des Fluids aus dem Füllkörperinneren begünstigt wird.

Die durch die Außenstruktur 2, 2a gebildete Außenkontur des Füllkörpers 1 ist flach ausgebildet und gewellt gestaltet, wobei die jeweilige Hauptausdehnungsfläche 3, 4 durch jeweils zwei aneinander angrenzende, nach innen gewölbte Teilflächen gebildet ist. Im Mittel weisen die eine Hauptausdehnungsfläche 3 eine im Wesentlichen konkave und die andere Hauptausdehnungsfläche eine im Wesentlichen konvexe Krümmung auf.

Eine zwischen den beiden Hauptausdehnungsflächen 3, 4 ausgebildete Innenstruktur 15 weist drei innere Leitprofile 5 auf, wobei diese inneren Leitprofile 5 geneigt zu den Hauptausdehnungsflächen 3, 4 ausgebildet sind.

Dabei sind die inneren Leitprofile 5 in die gleiche Richtung geneigt angeordnet, wobei benachbarte innere Leitprofile 5 nicht parallel zueinander, sondern geneigt zueinander ausgebildet sind. Ein Winkel β zwischen zwei inneren Leitprofilen 5 beträgt dabei vorzugsweise zwischen 5° und 20°, insbesondere zwischen 10° und 15°.

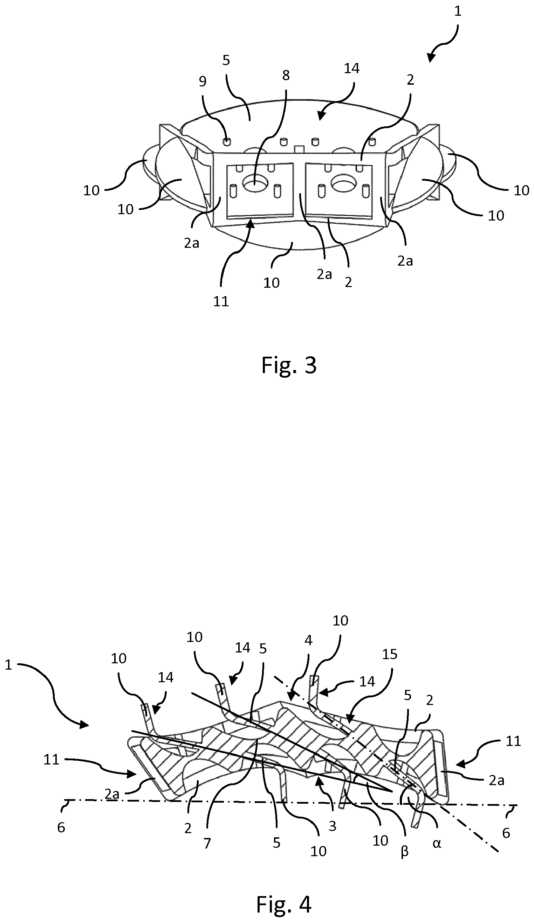

Auf der Seite des Füllkörpers 1, der die eine Hauptausdehnungsfläche 3 aufweist, ist durch die Außenstruktur 2, 2a eine Ebene 6 gebildet. Die inneren Leitprofile 5 sind geneigt zu dieser Ebene 6 ausgebildet, wobei ein Winkel α zwischen einem der inneren Leitprofile 5 und dieser Ebene 6 zwischen 10° und 70° beträgt, wie insbesondere der Fig. 4 zu entnehmen ist.

Die inneren Leitprofile 5 sind bevorzugt dünnwandig und bevorzugt leicht gebogen ausgebildet, wobei auch ein Wendepunkt für die Krümmung vorhanden sein kann.

Die Innenstruktur 15 des Füllkörpers 1 weist vier, in einer zu der Ebene 6 senkrechten anderen Ebene angeordnete Verbindungsstege 7 auf, wobei zwei dieser Verbindungsstege 7 jeweils zwei benachbarte innere Leitprofile 5 miteinander verbindet und die übrigen zwei Verbindungsstege 7 jeweils ein inneres Leitprofil 5 mit der Außenstruktur 2, 2a verbindet.

An den Seitenflächen 11 und den Hauptausdehnungsflächen 3, 4 weist der Füllkörper 1 zwölf nach außen hervorstehende äußere Leitprofile 10 auf. Sechs dieser zwölf äußeren Leitprofile 10 sind an gegenüberliegenden Seitenflächen 11 ausgebildet. Diese an den Seitenflächen 11 ausgebildeten äußeren Leitprofile 10 sind insbesondere in der Fig. 2 zu erkennen. Die anderen sechs äußeren Leitprofile 10 sind an den Hauptausdehnungsflächen 3, 4 ausgebildet, wobei drei äußere Leitprofile 10 an der einen Hauptausdehnungsfläche 3 und drei andere äußere Leitprofile 10 an der anderen Hauptausdehnungsfläche 4 ausgebildet sind, wie insbesondere der Fig. 1 zu entnehmen. Jeweils vier der äußeren Leitprofile 10, vorliegend eines der einen Seitenfläche 11, eines der anderen Seitenfläche 11, eines der einen Hauptausdehnungsfläche 3 und eines der anderen Hauptausdehnungsfläche 4, grenzen an eines der inneren Leitprofile 5 an, sodass das innere Leitprofil 5 und die an das innere Leitprofil 5 angrenzenden äußeren Leitprofile 10 durch einen Teilbereich eines Leitkörpers 14 gebildet sind. Der Leitkörper 14 durchsetzt die beiden Hauptausdehnungsflächen 3, 4 und zwei gegenüberliegende Seitenflächen 11 des Füllkörpers 1.

In einem Querschnitt senkrecht zu den beiden Hauptausdehnungsflächen 3, 4 weist der Leitkörper 14 einen S-förmigen Querschnitt auf.

Die inneren Leitprofile 5 weisen jeweils mehrere, kreisförmige Durchtrittsöffnungen 8 und mehrere in Richtung der anderen Hauptausdehnungsfläche 4 ausgebildete, stabförmige Vorsprünge 9 auf. Die Durchtrittsöffnungen 8 dienen dabei einer Reduzierung des Druckverlusts an dem Leitkörper 1 und zudem einer Vermischung und Verwirbelung des den Leitkörper 1 durchströmenden Fluids.

Die stabförmigen Vorsprünge 9 an der Oberfläche des inneren Leitprofils 5 fungieren u.a. als zusätzliche Abtropfstellen.

Eine besonders offene Struktur des Füllkörpers 1 wird dadurch erreicht, dass zwei gegenüberliegende Seitenflächen 11 des Füllkörpers 1 jeweils zwei Durchgangsöffnungen 12 aufweisen.

Für die nachfolgend beschriebenen Ausführungsbeispiele sind Komponenten, die mit denjenigen des vorstehend beschriebenen Ausführungsbeispiels übereinstimmen, mit denselben Bezugszeichen bezeichnet.

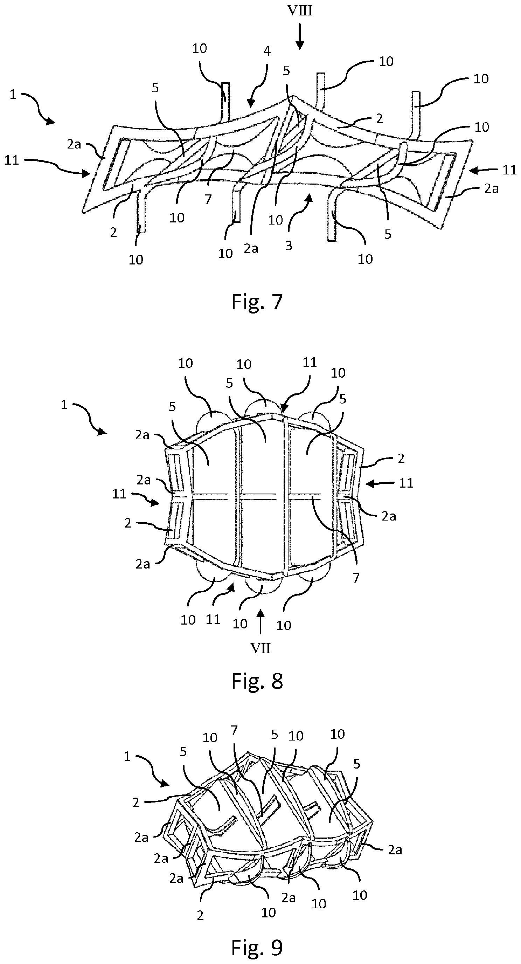

Die Fig. 7 bis 9 zeigen ein zweites Ausführungsbeispiel des Füllkörpers 1, wobei sich dieses Ausführungsbeispiel von dem ersten Ausführungsbeispiel im Wesentlichen dadurch unterscheidet, dass das innere Leitprofil 5 im Wesentlichen glatt und geschlossen ausgebildet und somit frei von Vorsprüngen 9 und Durchtrittsöffnungen 8 ist und benachbarte Leitprofile 5 in der Aufsichtsprojektion nicht überlappen.

Zudem sind die inneren Leitprofile 5 eben ausgebildet, wohingegen die äußeren Leitprofile 10 gebogen ausgebildet sind, wobei das äußere Leitprofil 10 an die eine Hauptausdehnungsfläche 3 annähernd tangential und an die andere Hauptausdehnungsfläche 4 annähernd senkrecht anschließt.

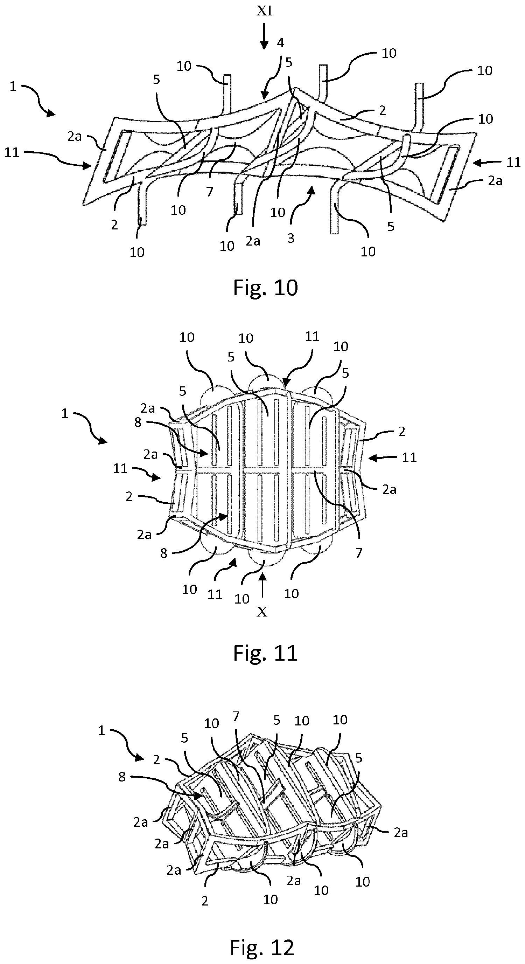

Ein in den Fig. 10 bis 12 gezeigtes, drittes Ausführungsbeispiel unterscheidet sich von dem in den Fig. 7 bis 9 gezeigten Ausführungsbeispiel im Wesentlichen dadurch, dass die inneren Leitprofile 5 jeweils mehrere schlitzartige Durchtrittsöffnungen 8 aufweisen.

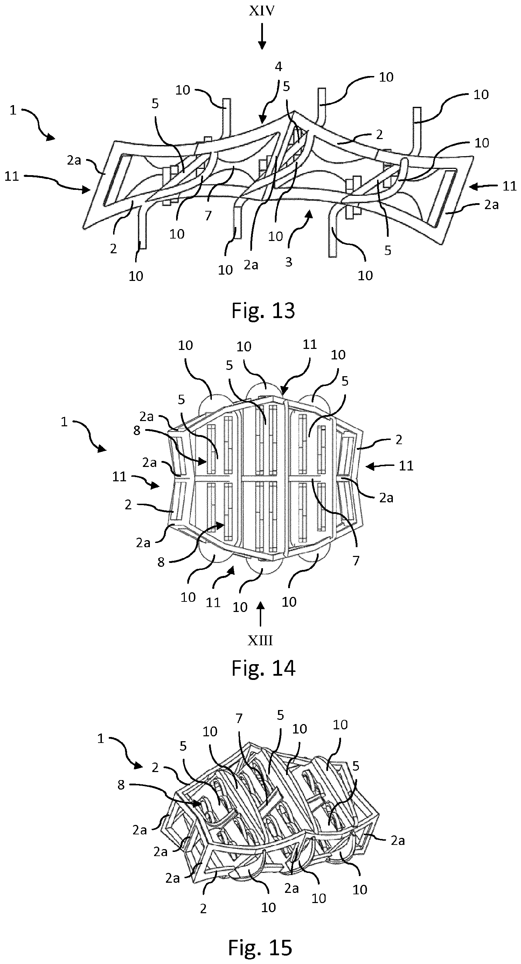

Das in den Fig. 13 bis 15 gezeigte Ausführungsbeispiel zeichnet sich gegenüber dem vorigen Ausführungsbeispiel dadurch aus, dass die schlitzartigen Durchtrittsöffnungen 8 dadurch gebildet sind, dass in die inneren Leitprofile 5 mehrere Schnitte eingebracht sind, wobei zwischen den Schnitten liegende Teilbereiche des inneren Leitprofils 5 gegensinnig bügelförmig ausgebogen sind.

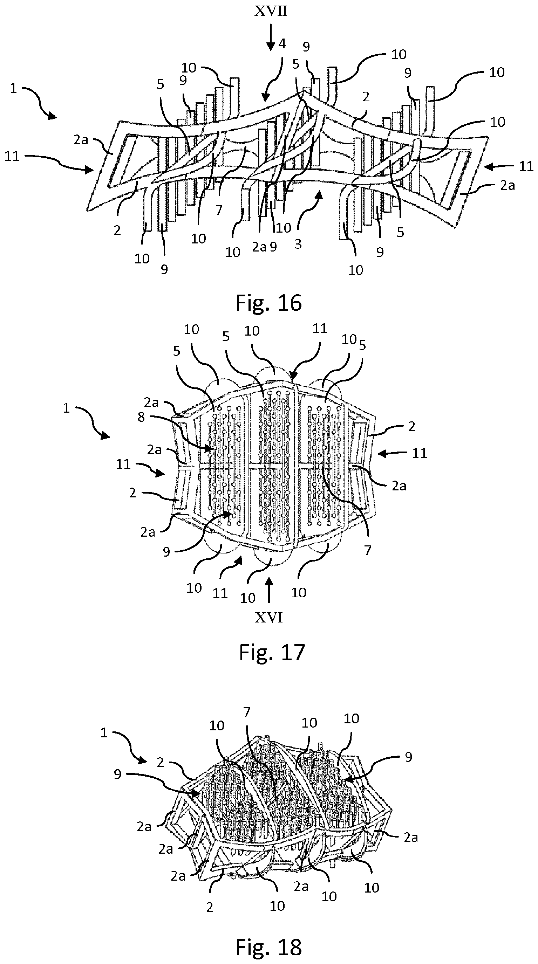

Das in den Fig. 16 bis 18 gezeigte fünfte Ausführungsbeispiel zeichnet sich gegenüber dem zweiten Ausführungsbeispiel im Wesentlichen dadurch aus, dass die inneren Leitprofile 5 eine Vielzahl von stabförmigen Vorsprüngen 9 aufweisen, wobei sowohl die der einen Hauptausdehnungsfläche 3 zugewandte Seite als auch die der anderen Hauptausdehnungsfläche 4 zugewandte Seite des inneren Leitprofils 5 mit Vorsprüngen 9 versehen ist.

Die stabförmigen Vorsprünge 9 sind dabei annähernd identisch gestaltet.

Die Längserstreckung der Vorsprünge 9 ist dabei derart, dass ein Teil der Vorsprünge 9 die eine Hauptausdehnungsfläche 3 oder die andere Hauptausdehnungsfläche 4 durchsetzt oder zumindest annähernd berührt.

Außerdem kann die Ausgestaltungsform auch ohne die äußeren Leitprofile ausgeführt sein.

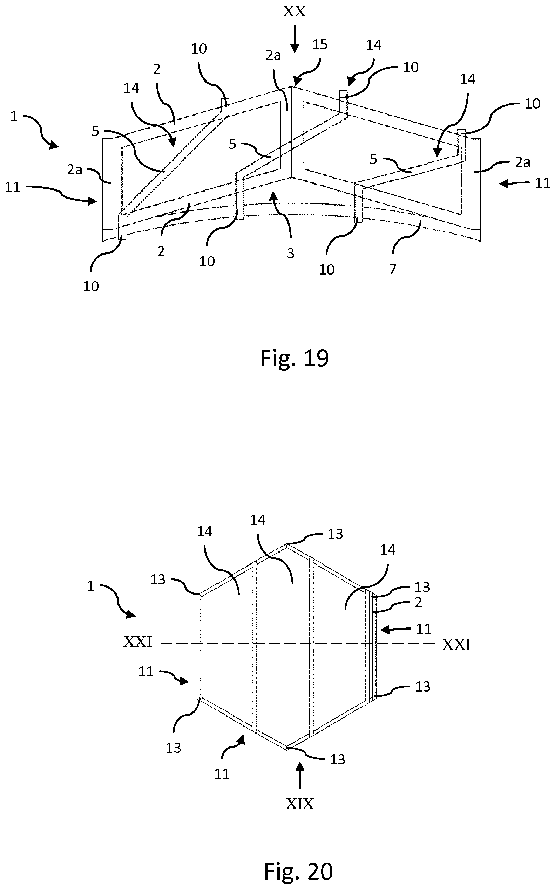

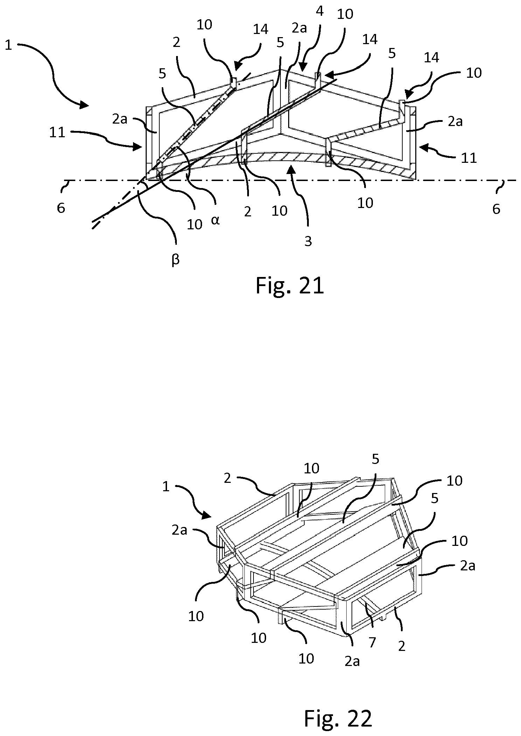

Die Fig. 19 bis 22 zeigen ein Vergleichsbeispiel eines Füllkörpers 1, welches nicht von den Patentansprüchen umfasst ist, wobei sich dieses Vergleichsbeispiel von dem ersten Ausführungsbeispiel im Wesentlichen dadurch unterscheidet, dass das innere Leitprofil 5 im Wesentlichen glatt und geschlossen ausgebildet und somit frei von Vorsprüngen 9 und Durchtrittsöffnungen 8 ist und benachbarte Leitprofile 5 in der Aufsichtsprojektion nicht überlappen. Die Übergänge zwischen den Leitprofilen 5 und den äußeren Leitprofilen 10 sind nicht abgerundet, sondern eckig. Die inneren Leitprofile 5 und äußeren Leitprofile 10 sind als rechteckförmige Platten ausgebildet. Äußere Leitprofile 10 an den Seitenflächen sind nicht vorhanden. Der Verbindungssteg 7 sitzt außen auf der Außenstruktur 2, 2a auf, und zwar mindestens auf den äußeren Leitprofilen 10 von mindestens einer der Hauptausdehnungsfläche (3 bzw. 4). Es ist aber auch denkbar ohne einen Verbindungssteg auszukommen. Einander abgewandte Seitenflächen 11 (d.h. die jeweils erste und vierte in einer Zählreihenfolge links- oder rechtsgängig - unabhängig davon welche der Seitenflächen als erste gewählt wird) sind bei diesem Vergleichsbeispiel zueinander parallel und stehen jeweils senkrecht auf einer gebildeten Ebene 6.

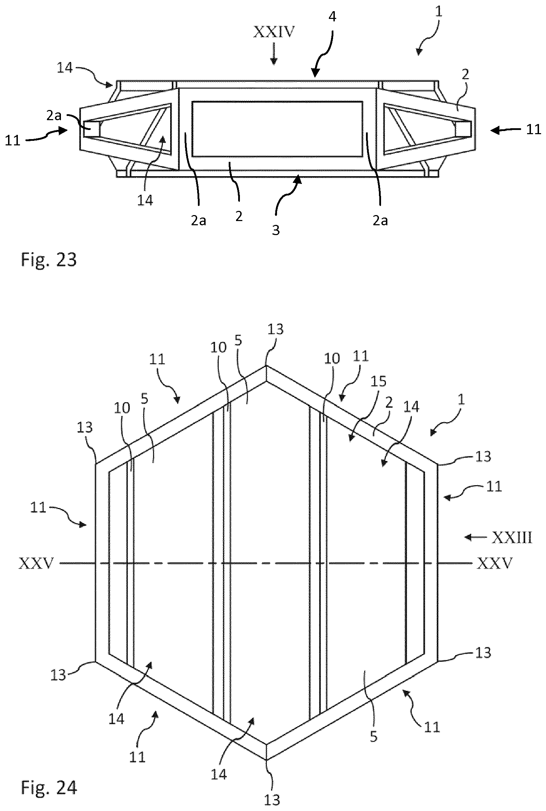

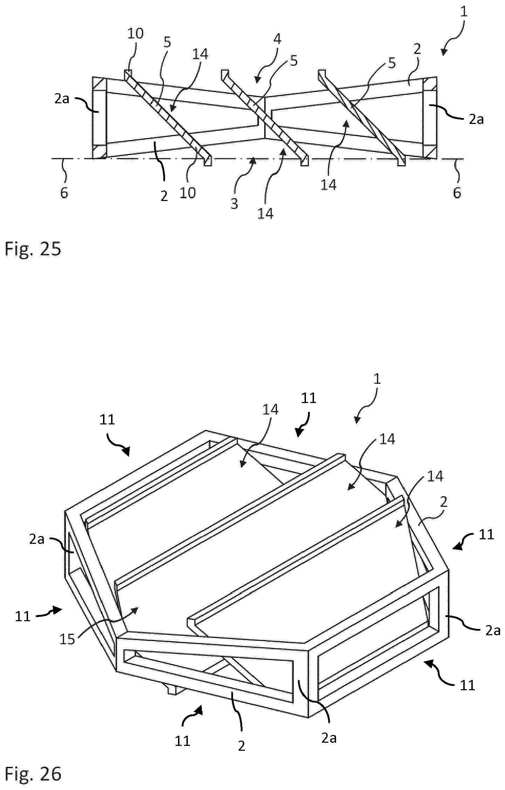

Die Figuren 23 bis 26 zeigen ein Vergleichsbeispiel eines Füllkörpers 1, welches nicht von den Patentansprüchen umfasst ist, wobei sich dieses Vergleichsbeipiel vom dem sechsten Ausführungsbeispiel dadurch unterscheidet, dass die an die Stirnseiten der Leitprofile 5 angrenzenden vier Seitenflächen 11 der Außenstruktur 2, 2a des Füllkörpers 1 jeweils nicht rechteckig ausgebildet sind, sondern sich die eine Seitenfläche 11 zur benachbarten Seitenfläche 11 hin konisch verjüngt, so dass die jeweilige Seitenfläche eine Trapezform aufweist. Die Außenstruktur 2, 2a ist in den einander abgewandten Endbereichen der verbleibenden beiden parallelen Seitenflächen 11 stärker ausgebildet als in den mittleren Bereich der Außenstruktur 2, 2a, in den die relevanten beiden Seitenflächen 11 aneinanderstoßen. Bei geringfügiger Abwandlung der Außenstruktur 2, 2a im Bereich der beiden aneinandergrenzenden genannten Seitenflächen 11 könnte die Außenstruktur 2, 2a modifiziert werden, dass sie in den einander abgewandten Endbereichen stärker ausgebildet ist als im mittleren Bereich. Dies ist dann der Fall, wenn sich das Trapez zu dem Verbindungsbereich dieser beiden Seiten 11 nicht verjüngt, wie zu diesem Vergleichsbeispiel gezeigt, sondern erweitert. Eine weitere Modifikation ist durch Änderung der Form der divergierenden Stäbe des jeweiligen Trapezes möglich. Bei dem Vergleichsbeispiel sind die Stäbe des Trapezes, die durch die Außenstäbe 2, 2a bzw. Teilbereiche der Außenstäbe 2, 2a gebildet sind, gerade ausgebildet. Sie können durchaus gebogen sein, insbesondere aus der Ausgangstrapezebene hervorgehend, bezüglich dieser nach außen oder innen gebogen sein. Hierdurch lässt sich ein Füllkörper 1 darstellen, der zwischen dem jeweiligen Endbereich und dem mittleren Bereich stärker oder schwächer ausgebildet ist als im Endbereich und im mittleren Bereich.

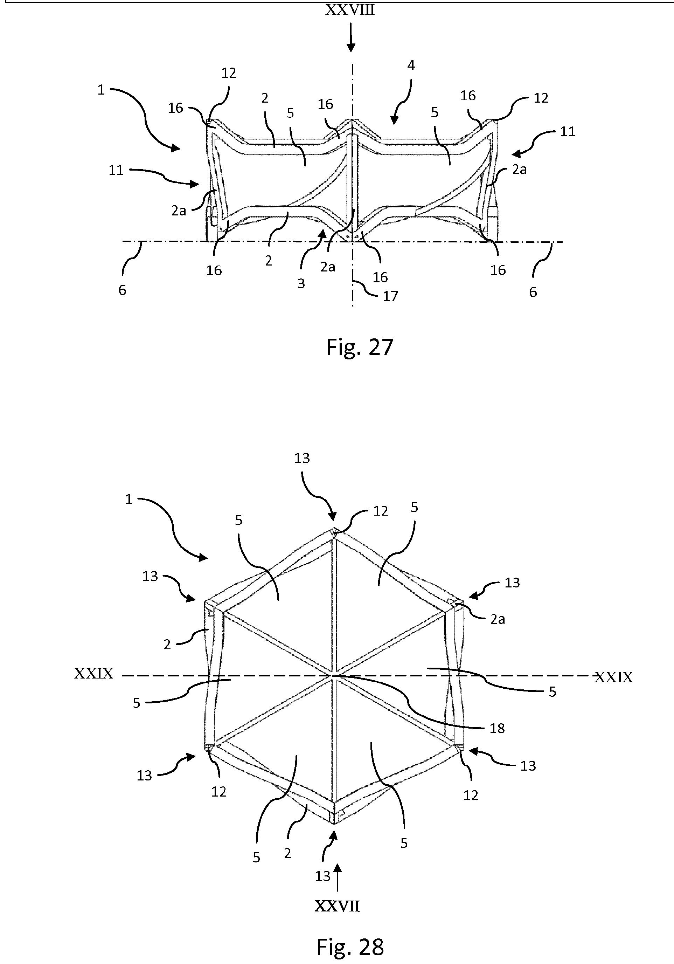

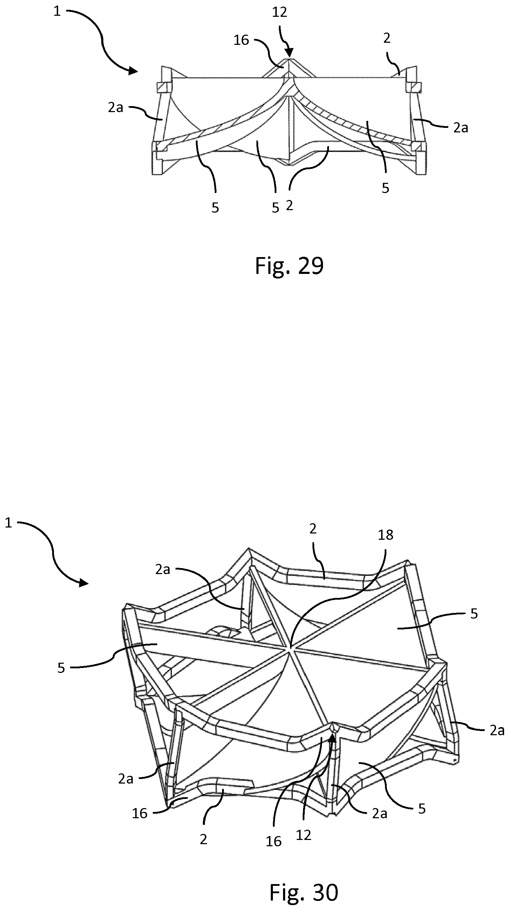

Die Fig. 27 bis 30 zeigen ein weiteres Ausführungsbeispiel des Füllkörpers 1, wobei sich dieses Ausführungsbeispiel gegenüber den vorigen Ausführungsbeispielen im Wesentlichen dadurch unterscheidet, dass die inneren Leitprofile 5 um eine Achse 17 umlaufend angeordnet sind, wobei die inneren Leitprofile 5 eine sich in Richtung der Achse 17 erstreckende gemeinsame Schnittlinie 18 aufweisen, wobei die inneren Leitprofile 5 bezüglich einer Umlaufrichtung um die Achse 17 in die gleiche Richtung geneigt ausgebildet sind. Die Leitprofile 5 sind folglich propellerartig angeordnet, wodurch die Bildung einer Drallströmung des Fluids begünstigt wird.

Der erste umlaufende Außenstab 2 und der zweite umlaufende Außenstab 2 weisen jeweils einen im Wesentlichen einander entgegengesetzt alternierenden Verlauf auf, wodurch in einem Randbereich der einen Hauptausdehnungsfläche 3 und in einem Randbereich der anderen Hauptausdehnungsfläche 4 mehrere im Wesentlichen gegenüberliegende, nach außen hervorstehende Teilbereiche 16 gebildet sind.

Die hervorstehenden Teilbereiche 16 sind dabei jeweils im Bereich einer der nach außen gerichteten Kanten 13 ausgebildet, wobei in einer Aufsichtsprojektion zwei in Projektionsrichtung gegenüberliegende Kanten 13, folglich eine Kante 13 der einen Hauptausdehnungsfläche 3 und eine Kante 13 der anderen Hauptausdehnungsfläche 4 zueinander versetzt ausgebildet sind.

Diese gegenüberliegenden Kanten 13 bzw. die dort ausgebildeten Teilbereiche 16 sind jeweils mit einem der sich zwischen den beiden Hauptausdehnungsflächen 3, 4 erstreckenden Außenstäbe 2a miteinander verbunden.

Zudem weist der Füllkörper 1 mehrere Abtropfnasen 12 auf, die im Bereich der Kanten 13 bzw. im Bereich der hervorstehenden Teilbereiche 16 ausgebildet sind.

### Bezugszeichenliste

- 1: Füllkörper
- 2: umlaufender Außenstab
- 2a: Außenstab
- 3: Hauptausdehnungsfläche
- 4: Andere Hauptausdehnungsfläche
- 5: Inneres Leitprofil
- 6: Ebene
- 7: Verbindungssteg
- 8: Durchtrittsöffnung
- 9: Vorsprung
- 10: Äußeres Leitprofil
- 11: Seitenfläche
- 12: Abtropfnase
- 13: Kante
- 14: Leitkörper
- 15: Innenstruktur
- 16: hervorstehender Teilbereich
- 17: Achse
- 18: Schnittlinie
- α: Winkel
- β: Winkel

## Patentansprüche

1. Füllkörper (1), insbesondere für Stoff- und/oder Wärmeaustauschkolonnen, die von einer Gas- und/oder Flüssigkeitsströmung durchsetzt werden, aufweisend eine Außenstruktur (2, 2a), wobei durch die Außenstruktur (2, 2a) zwei einander abgewandte Hauptausdehnungsflächen (3, 4) des Füllkörpers (1) gebildet sind, und eine zwischen den beiden Hauptausdehnungsflächen (3, 4) ausgebildete Innenstruktur (15), wobei die Innenstruktur (15) zumindest ein inneres Leitprofil (5) aufweist, wobei das innere Leitprofil (5) geneigt zu den Hauptausdehnungsflächen (3, 4) ausgebildet ist, wobei die Außenstruktur (2, 2a) durch Außenstäbe (2, 2a) gebildet ist, wobei mehrere dieser Außenstäbe (2, 2a) sich zwischen den beiden Hauptausdehnungsflächen (3, 4) erstrecken, wobei die Außenstruktur (2, 2a) einen ersten umlaufenden Außenstab (2) und einen zweiten umlaufenden Außenstab (2) aufweist, wobei der erste umlaufende Außenstab (2) die eine Hauptausdehnungsfläche (3) und der zweite umlaufende Außenstab (2) die andere Hauptausdehnungsfläche (4) umlaufend umschließt, wobei die sich zwischen den beiden Hauptausdehnungsflächen (3, 4) erstreckenden Außenstäbe (2a) den ersten umlaufenden Außenstab (2) mit dem zweiten umlaufenden Außenstab (2) verbinden, **dadurch gekennzeichnet, dass** die Außenstruktur (2, 2a) in einem Randbereich der einen Hauptausdehnungsfläche (3) und in einem Randbereich der anderen Hauptausdehnungsfläche (4) mehrere nach außen hervorstehende Teilbereiche (16) aufweist, wobei der erste umlaufende Außenstab (2) einen alternierenden Verlauf aufweist und der zweite umlaufende Außenstab (2) einen alternierenden Verlauf aufweist, wobei ein Außenstab (2a) einen der im Randbereich der einen Hauptausdehnungsfläche (3) hervorstehenden Teilbereiche (16) mit einem der im Randbereich der anderen Hauptausdehnungsfläche (3) hervorstehenden Teilbereiche (16) verbindet.

2. Füllkörper (1) nach Anspruch 1, **dadurch gekennzeichnet, dass** auf der die eine Hauptausdehnungsfläche (3) aufweisenden Seite des Füllkörpers (1) durch die Außenstruktur (2, 2a) eine Ebene (6) gebildet ist, wobei das innere Leitprofil (5) geneigt zu der Ebene (6) ausgebildet ist, insbesondere ein Winkel (α) zwischen dem inneren Leitprofil (5) und der Ebene (6) ≥10° bis ≤80°, vorzugsweise ≥20° bis ≤70° beträgt.

3. Füllkörper (1) nach Anspruch 1 oder 2, **dadurch gekennzeichnet, dass** der Füllkörper (1) mehrere beabstandete innere Leitprofile (5) aufweist, wobei die inneren Leitprofile (5) bezüglich einer Achsrichtung des Füllkörpers (1) in die gleiche Richtung geneigt ausgebildet sind.

4. Füllkörper (1) nach Anspruch 1 oder 2, **dadurch gekennzeichnet, dass** der Füllkörper (1) mehrere innere Leitprofile (5) aufweist, wobei die inneren Leitprofile (5) um eine Achse (17) umlaufend angeordnet sind, vorzugsweise die Leitprofile (5) sich im Bereich der Achse (17) kontaktieren, wobei die inneren Leitprofile (5) bezüglich einer Umlaufrichtung um die Achse (17) in die gleiche Richtung geneigt ausgebildet sind.

5. Füllkörper (1) nach Anspruch 3 oder 4, **dadurch gekennzeichnet, dass** benachbarte innere Leitprofile (5) zueinander geneigt ausgebildet sind, insbesondere ein Winkel (β) zwischen zwei inneren Leitprofilen (5) ≥5° und ≤ 20°beträgt.

6. Füllkörper (1) nach einem der Ansprüche 1 bis 5, **dadurch gekennzeichnet, dass** das innere Leitprofil (5) zumindest eine Durchtrittsöffnung (8) aufweist.

7. Füllkörper (1) nach einem der Ansprüche 1 bis 6, **dadurch gekennzeichnet, dass** das innere Leitprofil (5) mehrere Vorsprünge (9) aufweist, vorzugsweise die Vorsprünge (9) stabförmig ausgebildet sind, insbesondere die Vorsprünge (9) in Richtung der einen Hauptausdehnungsfläche (3) und/oder in Richtung der anderen Hauptausdehnungsfläche (4) ausgebildet sind.

8. Füllkörper (1) nach einem der Ansprüche 1 bis 7, **dadurch gekennzeichnet, dass** benachbarte innere Leitprofile (5) in einer Richtung senkrecht zu der durch die Außenstruktur (2, 2a) gebildeten Ebene (6) überlappend oder sich annähernd berührend in einer Aufsichtsprojektion angeordnet sind.

9. Füllkörper (1) nach einem der Ansprüche 1 bis 8, **dadurch gekennzeichnet, dass** eine durch die Außenstruktur (2, 2a) gebildete Außenkontur flach ausgebildet und/oder gewellt und/oder gewinkelt und/oder sattelförmig und/oder verdrillt gestaltet ist, insbesondere zwei einander abgewandte, durch die Außenstruktur (2, 2a) gebildete Seitenflächen (11) zueinander gewinkelt ausgebildet sind.

10. Füllkörper (1) nach einem der Ansprüche 1 bis 9, **dadurch gekennzeichnet, dass** der Füllkörper (1) mehrere Seitenflächen (11) aufweist, wobei die Seitenflächen (11) zwischen den beiden Hauptausdehnungsflächen (3, 4) ausgebildet sind, wobei die Außenstäbe (2, 2a) jeweils im Übergangsbereich zwischen zwei Seitenflächen (11) und/oder im Übergangsbereich zwischen einer der beiden Hauptausdehnungsflächen (3, 4) und einer der Seitenflächen (11) ausgebildet sind.

11. Füllkörper (1) nach einem der Ansprüche 1 bis 10, **dadurch gekennzeichnet, dass** die Außenstruktur (2, 2a) im Bereich der einen Hauptausdehnungsfläche (3) und im Bereich der anderen Hauptausdehnungsfläche (4) jeweils mehrere nach außen gerichtete Kanten (13) aufweist, insbesondere in einer Aufsichtsprojektion zwei in Projektionsrichtung gegenüberliegende Kanten (13) zueinander versetzt ausgebildet sind.

12. Füllkörper (1) nach einem der Ansprüche 1 bis 11, **dadurch gekennzeichnet, dass** die Außenstruktur (2, 2a) in einander abgewandten Endbereichen stärker oder schwächer ausgebildet ist, als in einem mittleren Bereich der Außenstruktur (2, 2a), insbesondere der Füllkörper (1) zwischen dem jeweiligen Endbereich und dem mittleren Bereich stärker oder schwächer ausgebildet ist als im Endbereich und im mittleren Bereich.

## Claims

1. Filling element (1), in particular for material and/or heat exchange columns through which a gas and/or liquid flow passes, having an outer structure (2, 2a), two mutually averted main extension surfaces (3, 4) of the filling element (1) being formed by the outer structure (2, 2a), and having an inner structure (15) formed between the two main extension surfaces (3, 4), the inner structure (15) having at least one inner guide profile (5), the inner guide profile (5) being inclined at an angle to the main extension surfaces (3, 4), the outer structure (2, 2a) being formed by outer rods (2, 2a), a plurality of these outer rods (2, 2a) extending between the two main extension surfaces (3, 4), the outer structure (2, 2a) having a first circumferential outer rod (2) and a second circumferential outer rod (2), the first circumferential outer rod (2) enclosing the one main extension surface (3) and the second circumferential outer rod (2) enclosing the other main extension surface (4) circumferentially, the outer rods (2a) extending between the two main extension surfaces (3, 4) connecting the first circumferential outer rod (2) to the second circumferential outer rod (2), **characterized in that** the outer structure (2, 2a) has a plurality of subregions (16) projecting outwards in an edge region of the one main extension surface (3) and in an edge region of the other main extension surface (4), the first circumferential outer rod (2) having an alternating course and the second circumferential outer rod (2) having an alternating course, an outer rod (2a) connecting one of the subregions (16) projecting in the edge region of the one main extension surface (3) to one of the subregions (16) projecting in the edge region of the other main extension surface (3).

2. Filling element (1) according to Claim 1, **characterized in that** a plane (6) is formed by the outer structure (2, 2a) on the side of the filling element (1) having a main extension surface (3), the inner guide profile (5) being inclined at an angle to the plane (6), in particular an angle (α) between the inner guide profile (5) and the plane (6) being ≥10° to ≤80°, preferably ≥20° to ≤70°.

3. Filling element (1) according to Claim 1 or 2, **characterized in that** the filling element (1) has a plurality of spaced inner guide profiles (5), the inner guide profiles (5) being inclined at an angle in the same direction with respect to an axial direction of the filling element (1).

4. Filling element (1) according to Claim 1 or 2, **characterized in that** the filling element (1) has a plurality of inner guide profiles (5), the inner guide profiles (5) being arranged circumferentially about an axis (17), preferably the guide profiles (5) contacting one another in the region of the axis (17), the inner guide profiles (5) being inclined in the same direction with respect to a circumferential direction about the axis (17).

5. Filling element (1) according to Claim 3 or 4, **characterized in that** adjacent inner guide profiles (5) are inclined relative to one another, in particular an angle (β) between two inner guide profiles (5) being ≥5° and ≤20°.

6. Filling element (1) according to one of Claims 1 to 5, **characterized in that** the inner guide profile (5) has at least one passage opening (8).

7. Filling element (1) according to one of Claims 1 to 6, **characterized in that** the inner guide profile (5) has a plurality of projections (9), preferably the projections (9) are rod-like, in particular the projections (9) are formed in the direction of the one main extension surface (3) and/or in the direction of the other main extension surface (4).

8. Filling element (1) according to one of Claims 1 to 7, **characterized in that** adjacent inner guide profiles (5) are arranged overlapping in a direction perpendicular to the plane (6) formed by the outer structure (2, 2a) or approximately touching in a plan view projection.

9. Filling element (1) according to one of Claims 1 to 8, **characterized in that** an outer contour formed by the outer structure (2, 2a) is flat and/or corrugated and/or angled and/or saddle-shaped and/or twisted, in particular two side surfaces (11) formed by the outer structure (2, 2a) and facing away from each other are formed at an angle to each other.

10. Filling element (1) according to one of Claims 1 to 9, **characterized in that** the filling element (1) has a plurality of side surfaces (11), the side surfaces (11) being formed between the two main extension surfaces (3, 4), the outer rods (2, 2a) each being formed in the transition region between two side surfaces (11) and/or in the transition region between one of the two main extension surfaces (3, 4) and one of the side surfaces (11).

11. Filling element (1) according to one of Claims 1 to 10, **characterized in that** the outer structure (2, 2a) in the region of the one main extension surface (3) and in the region of the other main extension surface (4) respectively has a plurality of edges (13) directed outwards, in particular two edges (13) located opposite each other in the projection direction are offset relative to each other in a plan view projection.

12. Filling element (1) according to one of Claims 1 to 11, **characterized in that** the outer structure (2, 2a) in end regions facing away from each other is formed more strongly or more weakly than in a central region of the outer structure (2, 2a), in particular the filling element (1) between the respective end region and the central region is formed more strongly or more weakly than in the end region and in the central region.

## Revendications

1. Corps de remplissage (1), en particulier pour des colonnes d'échange de substances et/ou de chaleur, qui sont parcourues par un écoulement de gaz et/ou de liquide, présentant une structure extérieure (2, 2a), deux surfaces d'étendue principale (3, 4) du corps de remplissage (1), opposées l'une à l'autre, étant formées par la structure extérieure (2, 2a), et une structure intérieure (15) réalisée entre les deux surfaces d'étendue principale (3, 4), la structure intérieure (15) présentant au moins un profil de guidage intérieur (5), le profil de guidage intérieur (5) étant réalisé de manière inclinée par rapport aux surfaces d'étendue principale (3, 4), la structure extérieure (2, 2a) étant formée par des barres extérieures (2, 2a), plusieurs de ces barres extérieures (2, 2a) s'étendant entre les deux surfaces d'étendue principale (3, 4), la structure extérieure (2, 2a) présentant une première barre extérieure périphérique (2) et une deuxième barre extérieure périphérique (2), la première barre extérieure périphérique (2) entourant l'une des surfaces d'étendue principale (3) et la deuxième barre extérieure périphérique (2) entourant l'autre surface d'étendue principale (4) sur leur périphérie, les barres extérieures (2a) s'étendant entre les deux surfaces d'étendue périphérique (3, 4) reliant la première barre extérieure périphérique (2) à la deuxième barre extérieure périphérique (2), **caractérisé en ce que** la structure extérieure (2, 2a) présente, dans une région de bord de l'une des surfaces d'étendue principale (3) et dans une région de bord de l'autre surface d'étendue principale (4), plusieurs régions partielles (16) faisant saillie vers l'extérieur, la première barre extérieure périphérique (2) présentant une allure alternée et la deuxième barre extérieure périphérique (2) présentant une allure alternée, une barre extérieure (2a) reliant l'une des régions partielles (16) faisant saillie dans la région de bord de l'une des surfaces d'étendue principale (3) à l'une des régions partielles (16) faisant saillie dans la région de bord de l'autre surface d'étendue principale (3).

2. Corps de remplissage (1) selon la revendication 1, **caractérisé en ce que**, du côté du corps de remplissage (1) présentant l'une des surfaces d'étendue principale (3), un plan (6) est formé par la structure extérieure (2, 2a), le profil de guidage intérieur (5) étant réalisé de manière inclinée par rapport au plan (6), en particulier un angle (α) entre le profil de guidage intérieur (5) et le plan (6) étant ≥ 10° à ≤ 80°, de préférence ≥ 20° à ≤ 70°.

3. Corps de remplissage (1) selon la revendication 1 ou 2, **caractérisé en ce que** le corps de remplissage (1) présente plusieurs profils de guidage intérieurs (5) espacés, les profils de guidage intérieurs (5) étant réalisés de manière inclinée dans la même direction par rapport à une direction axiale du corps de remplissage (1).

4. Corps de remplissage (1) selon la revendication 1 ou 2, **caractérisé en ce que** le corps de remplissage (1) présente plusieurs profils de guidage intérieurs (5), les profils de guidage intérieurs (5) étant disposés circonférentiellement autour d'un axe (17), de préférence les profils de guidage (5) venant en contact dans la région de l'axe (17), les profils de guidage intérieurs (5) étant réalisés de manière inclinée dans la même direction par rapport à une direction périphérique autour de l'axe (17).

5. Corps de remplissage (1) selon la revendication 3 ou 4, **caractérisé en ce que** des profils de guidage intérieurs (5) adjacents sont réalisés de manière inclinée les uns par rapport aux autres, en particulier un angle (β) entre deux profils de guidage intérieurs (5) étant ≥ 5° et ≤ 20°.

6. Corps de remplissage (1) selon l'une quelconque des revendications 1 à 5, **caractérisé en ce que** le profil de guidage intérieur (5) présente au moins une ouverture de passage (8).

7. Corps de remplissage (1) selon l'une quelconque des revendications 1 à 6, **caractérisé en ce que** le profil de guidage intérieur (5) présente plusieurs saillies (9), de préférence les saillies (9) sont réalisées en forme de barres, en particulier les saillies (9) sont réalisées dans la direction de l'une des surfaces d'étendue principale (3) et/ou dans la direction de l'autre surface d'étendue principale (4).

8. Corps de remplissage (1) selon l'une quelconque des revendications 1 à 7, **caractérisé en ce que** des profils de guidage intérieurs (5) adjacents sont disposés, en projection verticale, dans une direction perpendiculairement au plan (6) formé par la structure extérieure (2, 2a) de manière à se chevaucher ou à être approximativement en contact.

9. Corps de remplissage (1) selon l'une quelconque des revendications 1 à 8, **caractérisé en ce qu'**un contour extérieur formé par la structure extérieure (2, 2a) est réalisé sous forme plate et/ou sous forme ondulée et/ou sous forme coudée et/ou en forme de selle et/ou sous forme torsadée, en particulier deux surfaces latérales (11) opposées l'une à l'autre, formées par la structure extérieure (2, 2a), sont réalisées sous forme coudée l'une par rapport à l'autre.

10. Corps de remplissage (1) selon l'une quelconque des revendications 1 à 9, **caractérisé en ce que** le corps de remplissage (1) présente plusieurs surfaces latérales (11), les surfaces latérales (11) étant réalisées entre les deux surfaces d'étendue principale (3, 4), les barres extérieures (2, 2a) étant à chaque fois réalisées dans la région de transition entre deux surfaces latérales (11) et/ou dans la région de transition entre l'une des deux surfaces d'étendue principale (3, 4) et l'une des surfaces latérales (11).

11. Corps de remplissage (1) selon l'une quelconque des revendications 1 à 10, **caractérisé en ce que** la structure extérieure (2, 2a) dans la région de l'une des surfaces d'étendue principale (3) et dans la région de l'autre surface d'étendue principale (4) présente à chaque fois plusieurs arêtes orientées vers l'extérieur (13), en particulier en projection verticale, deux arêtes (13) opposées dans la direction de projection sont réalisées de manière décalée l'une par rapport à l'autre.

12. Corps de remplissage (1) selon l'une quelconque des revendications 1 à 11, **caractérisé en ce que** la structure extérieure (2, 2a) est réalisée dans des régions d'extrémité mutuellement opposées de manière plus solide ou moins solide que dans une région centrale de la structure extérieure (2, 2a), en particulier le corps de remplissage (1) est réalisé entre la région d'extrémité respective et la région centrale de manière plus solide ou moins solide que dans la région d'extrémité et dans la région centrale.
